# EUROPEAN PATENT APPLICATION

(11) **EP 4 625 553 A1**
(43) Date of publication of application: **01.10.2025**
(21) Application number: 25166763.0
(22) Date of filing: 27.03.2025
(51) Int. Cl.: H01M 8/04007, H01M 8/04089, H01M 8/04119, H01M 8/249

(54) **FUEL CELL SYSTEM**

(30) Priority: 28.03.2024 JP 2024053921; 09.10.2024 JP 2024177415
(71) Applicant: Aisin Corporation, Kariya, Aichi 448-8650 (JP)
(72) Inventor: TAKAHASHI, Munehiro, Kariya, Aichi 448-8650 (JP); TAKIKAWA, Yoshihiro, Kariya, Aichi 448-8650 (JP); KATO, Kenji, Kariya, Aichi 448-8650 (JP); UEYAMA, Koji, Kariya, Aichi 448-8650 (JP); NAGAYA, Masahiro, Kariya, Aichi 448-8650 (JP)
(74) Representative: Cabinet Beau de Loménie

(57) **Abstract**

A fuel cell system (10) includes: a plurality of power generation modules (30) each including a fuel cell stack (31) and a module case (35), the fuel cell stack (31) generating power with fuel gas supplied to an anode and oxidant gas supplied to a cathode, the module case (35) having a heat insulating property and housing the fuel cell stack (31); a plurality of fuel supply systems (40) including a plurality of fuel supply lines (41), respectively, each of the fuel supply lines (41) supplying the fuel gas to corresponding one of the plurality of power generation modules (30); a plurality of circulation systems (60) including a plurality of recirculation lines (63), respectively, each of the recirculation lines (63) causing fuel off-gas discharged from corresponding one of the plurality of power generation modules (30) to pass through corresponding one of heat exchangers (62) and then to be recirculated to corresponding one of the fuel supply lines (41); a plurality of condensed water tanks (66) each storing condensed water obtained by condensation in corresponding one of the heat exchangers (62) of water vapor contained in the fuel off-gas in corresponding one of the plurality of circulation systems (60); and a frame (21) that supports the plurality of power generation modules (30), the plurality of fuel supply systems (40), and the plurality of condensed water tanks (66), wherein the plurality of condensed water tanks (66) are installed in a space defined below installation positions of the plurality of power generation modules (30) in the frame (21).

## Description

### TECHNICAL FIELD

The present specification discloses a fuel cell system.

### BACKGROUND DISCUSSION

As a conventional type of fuel cell system, there has been developed a fuel cell system including: a cell stack; a high-temperature housing that houses the cell stack and a combustor; a fuel gas supply channel that supplies fuel gas to the cell stack by operation of a fuel gas pump; a fuel off-gas feeding channel that guides the fuel off-gas from the cell stack to the outside of the high-temperature housing and then introduces the fuel off-gas into the high-temperature housing again to supply the fuel off-gas to the combustor; a second heat exchanger disposed at an intermediate portion of the fuel off-gas feeding channel (outside the high-temperature housing); a recycle channel that branches from a downstream side of the second heat exchanger of the fuel off-gas feeding channel and is connected between the fuel gas pump and a second throttle member in the fuel gas feeding channel; and a recycle valve provided in the recycle channel (See, for example, JP 7221641 B). In this fuel cell system, the fuel off-gas from the cell stack is cooled by the second heat exchanger and then fed to the combustor, and a part of the fuel off-gas fed from the second heat exchanger to the combustor is returned to the fuel gas supply channel through the recycle channel by the negative pressure generated by the operation of the fuel gas pump.

When the fuel off-gas from the fuel cell stack is passed through the heat exchanger and recirculated to the fuel supply line, it is desirable to reduce water vapor contained in the fuel off-gas to be recirculated as much as possible in order to satisfactorily improve power generation efficiency of the fuel cell stack. In addition, when a plurality of power generation modules are coupled to increase the output of the system, it is also required to reduce the size of the system in addition to reducing the water vapor contained in the fuel off-gas.

A need thus exists for a fuel cell system that is downsized, causes fuel off-gas to pass through a heat exchanger to be recirculated to a fuel supply line, and satisfactorily removes water vapor from the fuel off-gas to be recirculated to the fuel supply line.

### SUMMARY

The present disclosure has adopted the following means to achieve the above main object.

As summarized, a fuel cell system of the present disclosure includes:
a plurality of power generation modules each including a fuel cell stack and a module case, the fuel cell stack generating power with fuel gas supplied to an anode and oxidant gas supplied to a cathode, the module case having a heat insulating property and housing the fuel cell stack;
a plurality of fuel supply systems including a plurality of fuel supply lines, respectively, each of the fuel supply lines supplying the fuel gas to corresponding one of the plurality of power generation modules;
a plurality of circulation systems including a plurality of recirculation lines, respectively, each of the recirculation lines causing fuel off-gas discharged from corresponding one of the plurality of power generation modules to pass through corresponding one of heat exchangers and then to be recirculated to corresponding one of the fuel supply lines;
a plurality of condensed water tanks each storing condensed water obtained by condensation in corresponding one of the heat exchangers of water vapor contained in the fuel off-gas in corresponding one of the plurality of circulation systems; and
a frame that supports the plurality of power generation modules, the plurality of fuel supply systems, and the plurality of condensed water tanks, wherein
the plurality of condensed water tanks are installed in a space defined below installation positions of the plurality of power generation modules in the frame.

A fuel cell system of the present disclosure includes: a plurality of power generation modules; and a fuel supply system that supplies fuel gas to each of the plurality of power generation modules, the fuel cell system including a plurality of recirculation lines that cause fuel off-gas from each of the power generation modules to pass through corresponding one of heat exchangers and then to be recirculated to a fuel supply line of corresponding one of the fuel supply systems; a plurality of condensed water tanks that store condensed water generated in corresponding one of the heat exchangers; and a frame that supports the plurality of power generation modules, the plurality of fuel supply systems, and the plurality of condensed water tanks. The plurality of condensed water tanks are installed in a space defined below installation positions of the plurality of power generation modules in the frame. As a result, the condensed water generated by the heat exchanger can easily flow to the condensed water tank, and the water vapor contained in the fuel off-gas can be satisfactorily removed. In addition, the plurality of condensed water tanks can be efficiently disposed in a limited space, and the entire system can be downsized.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an external perspective view of a fuel cell system including a plurality of fuel cell units;
Fig. 2 is an internal perspective view of the fuel cell unit;
Fig. 3 is an internal perspective view of the fuel cell unit excluding a frame;
Fig. 4 is an internal front view of the fuel cell unit;
Fig. 5 is an internal front view of the fuel cell unit excluding the frame;
Fig. 6 is an internal side view of the fuel cell unit;
Fig. 7 is an internal side view of the fuel cell unit excluding the frame;
Figs. 8A and 8B are partially enlarged views of the fuel cell unit;
Fig. 9 is a schematic configuration view of the fuel cell system;
Fig. 10 is an external perspective view of a fuel blower subassembly;
Fig. 11 is an external perspective view of an air blower subassembly;
Fig. 12 is an external perspective view of a condensed water tank subassembly; and
Figs. 13A, 13B, and 13C are configuration views of a part of a fuel cell system according to another embodiment.

### DETAILED DESCRIPTION

Embodiments for carrying out the present disclosure will be described with reference to the drawings.

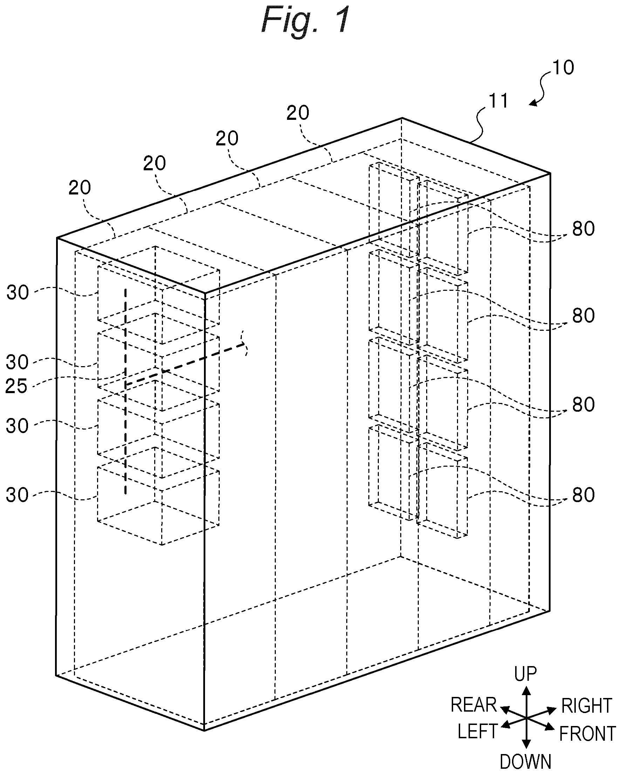

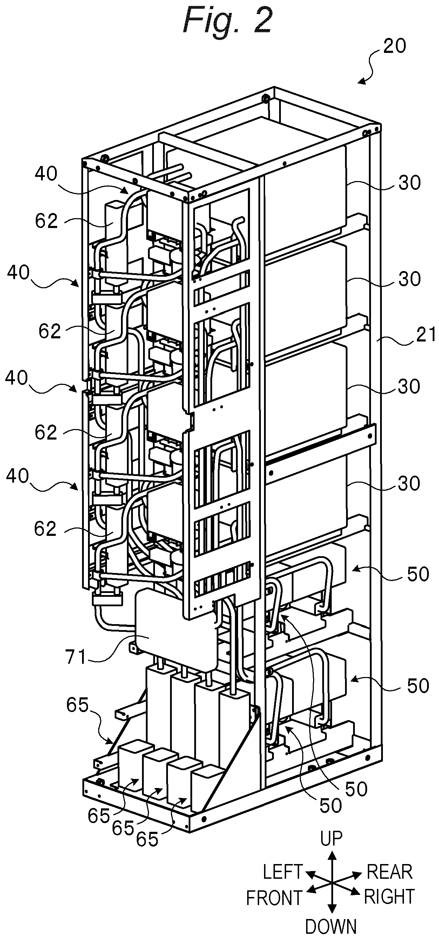

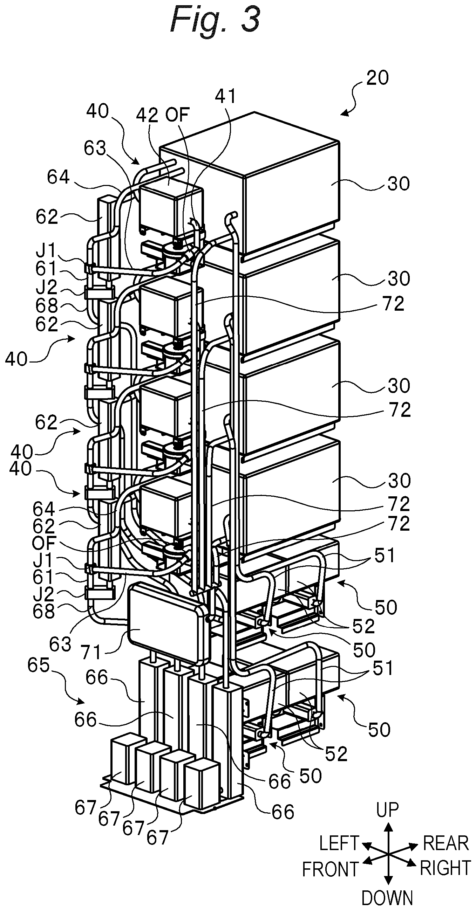

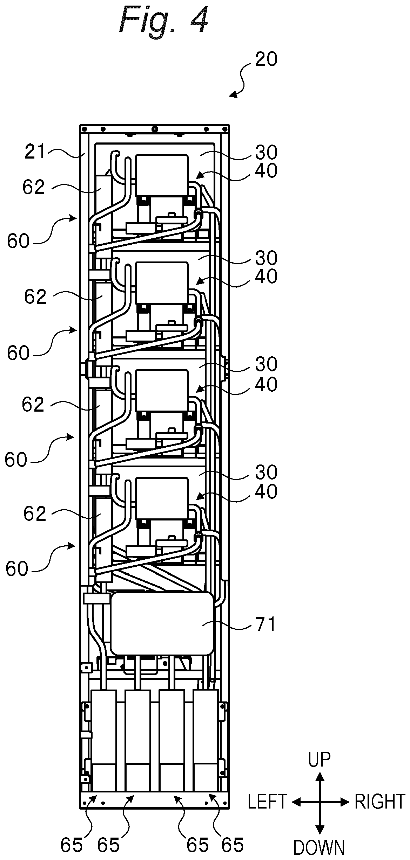

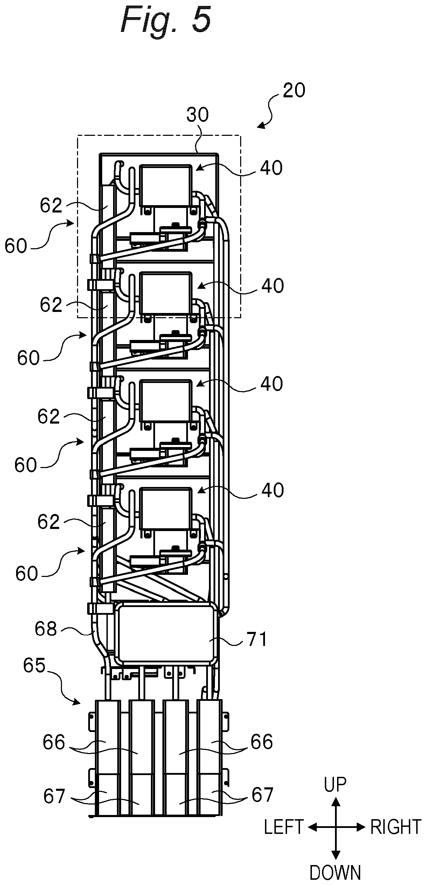

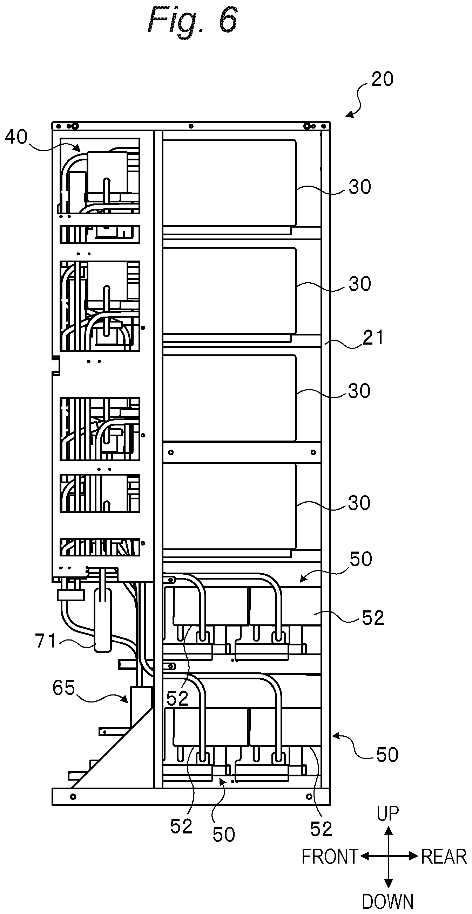

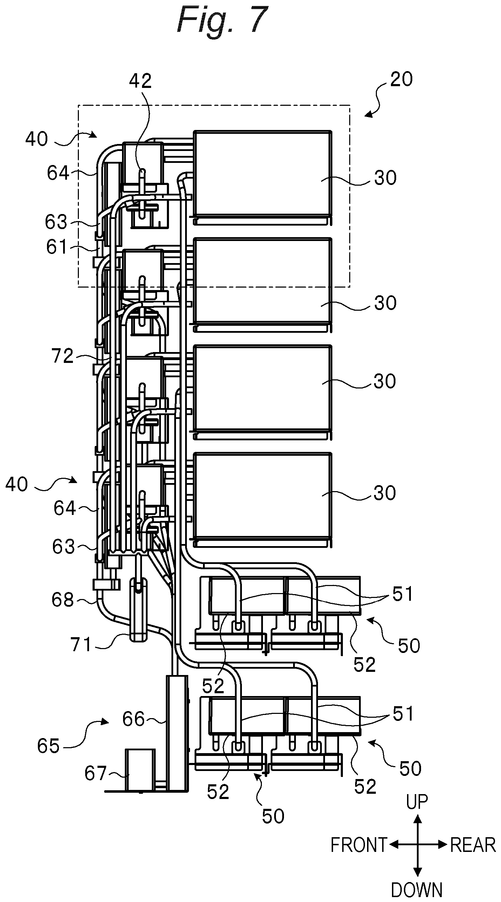

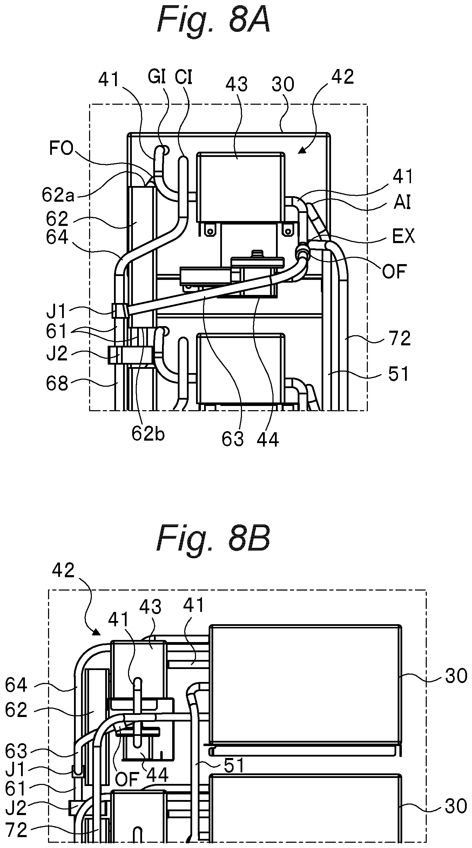

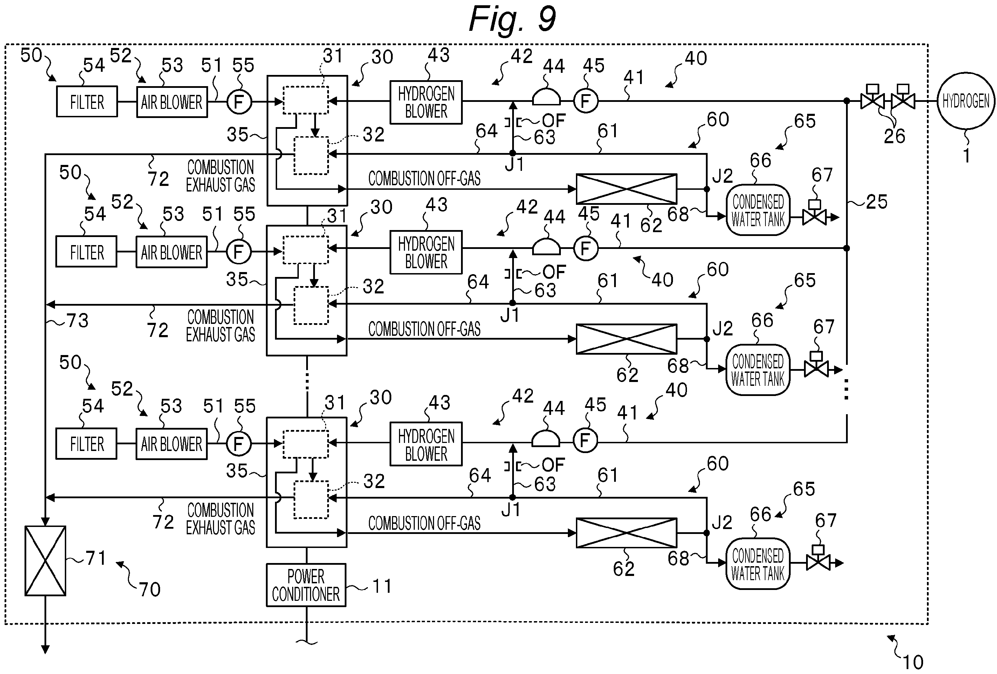

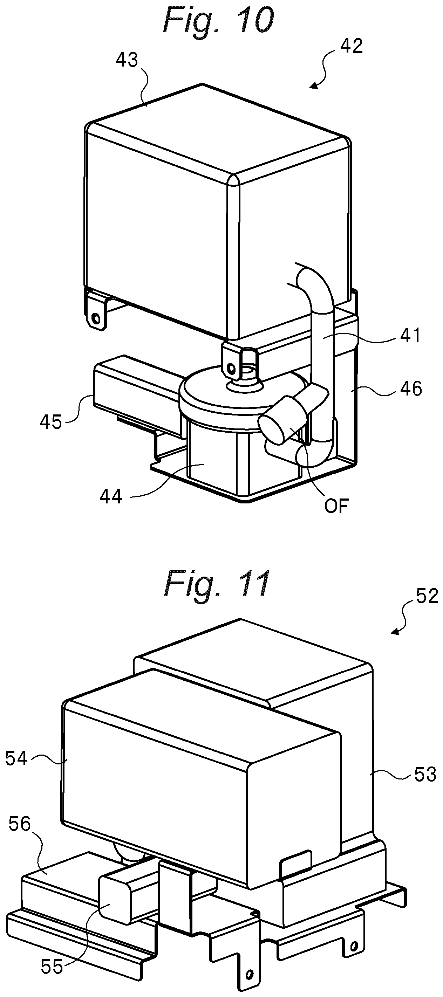

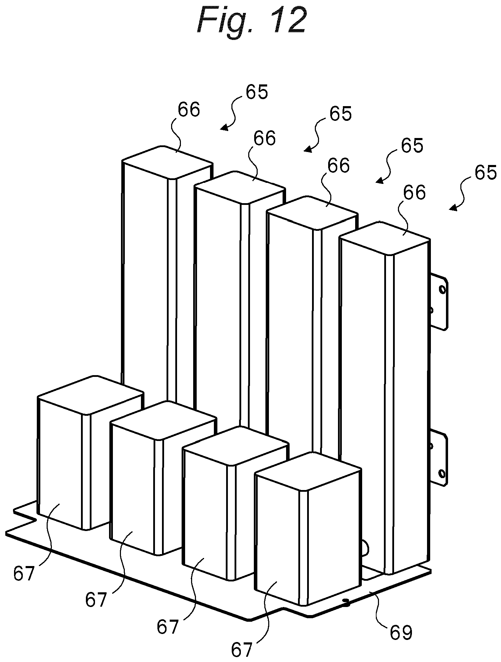

Fig. 1 is an external perspective view of a fuel cell system 10 including a plurality of fuel cell units 20. Fig. 2 is an internal perspective view of the fuel cell unit 20, and Fig. 3 is an internal perspective view of the fuel cell unit 20 excluding a frame 21. Fig. 4 is an internal front view of the fuel cell unit 20, and Fig. 5 is an internal front view of the fuel cell unit 20 excluding the frame 21. Fig. 6 is an internal side view of the fuel cell unit 20, and Fig. 7 is an internal side view of the fuel cell unit 20 excluding the frame 21. Figs. 8A and 8B are partially enlarged views of the fuel cell unit 20, and Fig. 9 is a schematic configuration view of the fuel cell system 10. Fig. 10 is an external perspective view of a fuel blower subassembly 42, Fig. 11 is an external perspective view of an air blower subassembly 52, and Fig. 12 is an external perspective view of a condensed water tank subassembly 65.

As illustrated in Fig. 1, the fuel cell system 10 according to the present embodiment includes a plurality of (N, e.g. 4) fuel cell units 20 each including a plurality of (M, e.g. 4) power generation modules 30, an enclosure 11 covering the plurality of fuel cell units 20. The plurality of fuel cell units 20 are installed so as to be aligned in the right-left direction, and the power generation modules 30 are connected in series among the plurality of fuel cell units 20, whereby the fuel cell system 10 is configured.

Each fuel cell unit 20 is a unit having a substantially rectangular parallelepiped appearance, and as shown in Figs. 2, 4, and 6, includes the frame 21 that supports and fixes various constituent members of the fuel cell unit 20. The frame 21 is configured by coupling a plurality of columns installed on the outer periphery with beams.

As shown in Fig. 9, each fuel cell unit 20 includes the power generation module 30 including one fuel cell stack 31, a fuel supply system 40, an oxidant supply system 50, a circulation system 60, an exhaust heat recovery system 70, and an electronic control unit (ECU) 80 (see Fig. 1). In the present embodiment, each fuel cell unit 20 includes a plurality of power generation modules 30 (fuel cell stacks 31) connected in series. One fuel supply system 40, one oxidant supply system 50, one circulation system 60, and one electronic control unit 80 are provided for one power generation module 30.

The plurality of power generation modules 30 of the fuel cell unit 20 are fixed to the frame 21 by bolts so as to be aligned in the up-down direction. As illustrated in Fig. 9, each of the power generation modules 30 includes a combustor 32, a heat exchanger, and the like in addition to the fuel cell stack 31. These components are housed in a module case 35 having a heat insulating property. The fuel cell stack 31 includes a plurality of solid oxide unit cells each including an electrolyte, an anode (fuel electrode) disposed on one surface side of the electrolyte, and a cathode (air electrode) disposed on the other surface side of the electrolyte. The fuel cell stack 31 generates power by an electrochemical reaction between hydrogen contained in fuel gas supplied from a fuel supply source 1 (for example, hydrogen tank) and oxygen contained in oxidant gas (air).

As illustrated in Figs. 2, 3, and 9, each of the plurality of fuel supply systems 40 of the fuel cell unit 20 includes a fuel gas pipe 41 (or fuel supply line) and the fuel blower subassembly 42 including a fuel blower 43 installed in the fuel gas pipe 41. The fuel blower subassemblies 42 of the plurality of fuel supply systems 40 are installed so as to be aligned in the up-down direction and to face the corresponding power generation modules 30, respectively, in the front-rear direction (lateral direction). The fuel gas pipes 41 branch from a common fuel pipe 25 connected to the fuel supply source 1, and are connected to fuel gas inlets GI in the corresponding power generation modules 30 (module cases 35), respectively. An on-off valve 26 (dual valve) is installed in the fuel pipe 25. By operating the fuel blower 43, the fuel gas (hydrogen gas) of the fuel supply source 1 is distributed from the fuel pipe 25 to each fuel gas pipe 41, and is introduced into the corresponding power generation module 30 from the fuel gas inlet GI. Then, the fuel gas introduced into the power generation module 30 is supplied through the fuel gas channel in the power generation module 30 to the anode of the fuel cell stack 31. The fuel supply system 40 (fuel blower subassembly 42) is installed so as to face the corresponding power generation module 30, and the fuel gas inlet GI is formed on a side surface (front surface) of the power generation module 30 facing the fuel supply system 40. As a result, the pipe length of the pipe (fuel gas pipe 41) of the fuel supply system 40 can be shortened, and routing of the pipe can be facilitated. Since the fuel blower 43 is installed in each fuel gas pipe 41 (branch pipe), individually controlling the fuel blowers 43 enables controlling the supply amount of the fuel gas for each power generation module 30.

As illustrated in Fig. 10, the fuel blower subassembly 42 includes a governor 44 (zero governor) and a flow rate sensor 45 in addition to the fuel blower 43. The flow rate sensor 45, the governor 44, and the fuel blower 43 are installed in this order from the upstream side with respect to the fuel gas pipe 41. The flow rate sensor 45, the governor 44, and the fuel blower 43 are attached to a bracket 46, and the bracket 46 is fixed to the beam of the frame 21 with bolts. By making the fuel blower subassembly 42 detachable from the frame 21 by bolts, maintainability can be further improved.

As illustrated in Figs. 2, 3, 6, 7, and 9, the plurality of oxidant supply systems 50 of the fuel cell unit 20 include an air pipe 51 and an air blower subassembly 52 including an air blower 53 installed in the air pipe 51. The air blower subassemblies 52 of the plurality of oxidant supply systems 50 are collectively installed in a space at the bottom of the frame 21 defined below the plurality of power generation modules 30 aligned in the up-down direction in the frame 21. As a result, the air blower subassemblies 52 can be efficiently installed in a limited space, and the fuel cell system 10 can be further downsized. In the present embodiment, each air blower subassembly 52 is installed such that a plurality of (two) air blower subassemblies 52 aligned in the front-rear direction (lateral direction) form a plurality of upper and lower stages (two stages). An air filter 54 is attached to one end of the air pipe 51, and the other end of the air pipe 51 is connected to an air inlet Al of the corresponding power generation module 30. By operating the air blower 53, air is sucked into the air pipe 51 via the air filter 54, and the sucked air is introduced through the air pipe 51 into the corresponding power generation module 30 from the air inlet AI. Then, the air introduced into the power generation module 30 is supplied through the air channel in the power generation module 30 to the cathode of the fuel cell stack 31. Since the air blower 53 is installed in each air pipe 51, individually controlling the air blowers 53 enables controlling the supply amount of air for each power generation module 30. In the present embodiment, as illustrated in Figs. 8A and 8B, the air inlet Al is formed on the same surface as a side surface (front surface) of the power generation module 30 (module case 35) on which the fuel gas inlet GI is formed. As illustrated in Fig. 7, each air pipe 51 extends upward from each air blower subassembly 52 installed at the bottom of the frame 21 so as to pass between the power generation module 30 and the fuel supply system 40, and is connected to the air inlet Al of the corresponding power generation module 30. As a result, the air pipe 51 can be connected from the air blower subassembly 52 to the power generation module 30 without hindering the layout of the power generation module 30 and the fuel supply system 40.

As illustrated in Fig. 11, the air blower subassembly 52 includes a flow rate sensor 55 in addition to the air blower 53 and the air filter 54. The air pipe 51 includes the air filter 54, the air blower 53, and the flow rate sensor 55 installed in this order from the upstream side with respect to the air pipe 51. The air filter 54, the air blower 53, and the flow rate sensor 55 are attached to a bracket 56, and the bracket 56 is fixed to the beam of the frame 21 with bolts. By making the air blower subassembly 52 detachable from the frame 21 by bolts, maintainability can be further improved.

As illustrated in Figs. 3, 4, 5, 8A, 8B, and 9, each of the plurality of circulation systems 60 of the fuel cell unit 20 includes a fuel off-gas pipe 61 (or fuel off-gas line), a condenser 62 (or heat exchanger) installed in the fuel off-gas pipe 61, a recirculation pipe 63 (or recirculation line), a combustion gas pipe 64, and a condensed water pipe 68 (or condensed water line) branching on the downstream side of the condenser 62 in the fuel off-gas pipe 61, and a condensed water tank subassembly 65 including a condensed water tank 66.

One end of the fuel off-gas pipe 61 is connected to a fuel off-gas outlet FO of the power generation module 30. One end of the recirculation pipe 63 is connected to a branch point J1 on the other end side of the fuel off-gas pipe 61, and the other end of the recirculation pipe 63 is connected between the fuel blower 43 and the governor 44 in the fuel gas pipe 41 of the corresponding fuel supply system 40. An orifice OF as a pressure control valve is formed in the recirculation pipe 63. One end of the combustion gas pipe 64 is connected to the branch point J1 of the fuel off-gas pipe 61, and the other end of the combustion gas pipe 64 is connected to a combustion gas inlet CI of the corresponding power generation module 30 (module case 35). In the present embodiment, the fuel off-gas outlet FO and the combustion gas inlet CI are formed on the same surface as a side surface (front surface) of the power generation module 30 (module case 35) on which the fuel gas inlet GI is formed. As a result, the pipe length of the pipes of the circulation system 60 (fuel off-gas pipe 61, recirculation pipe 63, and combustion gas pipe 64) can be shortened, and routing of the pipes can be facilitated. One end of the condensed water pipe 68 is connected to a branch point J2 provided on the downstream side of the condenser 62 and on the upstream side of the branch point J1 in the fuel off-gas pipe 61, and the other end of the condensed water pipe 68 is connected to the condensed water tank 66.

The condenser 62 condenses water vapor contained in the fuel off-gas. As illustrated in Figs. 8A and 8B, the condenser 62 has an appearance of a rectangular tube extending in the up-down direction, and is installed on a surface side of the corresponding power generation module 30 facing the fuel supply system 40. Formed in an upper portion of the condenser 62 is a fuel off-gas introduction port 62a through which the fuel off-gas discharged from the fuel off-gas outlet FO is introduced. Formed in a lower portion of the condenser 62 is a fuel off-gas discharge port 62b through which the fuel off-gas having passed through the condenser 62 is discharged. The condenser 62 is installed such that the fuel off-gas introduction port 62a is located below the fuel off-gas outlet FO of the corresponding power generation module 30, and the fuel off-gas discharge port 62b is located above the branch point J2 from the fuel off-gas pipe 61 to the condensed water pipe 68. As a result, it is possible to smoothly discharge the condensed water obtained by condensing the water vapor contained in the fuel off-gas in the condenser 62.

The fuel off-gas discharged from the anode outlet of the fuel cell stack 31, via the fuel off-gas channel in the power generation module 30, through the fuel off-gas outlet FO passes through the fuel off-gas pipe 61, and water vapor contained in the fuel off-gas is condensed by heat exchange with a heat exchange medium (cooling water) in the condenser 62. Then, the fuel off-gas that has passed through the condenser 62 is distributed to the recirculation pipe 63 and the combustion gas pipe 64. The fuel off-gas distributed to the recirculation pipe 63 is sucked into the fuel gas pipe 41 by the negative pressure generated by the operation of the fuel blower 43, is introduced into the fuel gas inlet GI of the power generation module 30 together with the fuel gas from the fuel supply source 1, and is supplied to the anode inlet of the fuel cell stack 31. On the other hand, the fuel off-gas distributed to the combustion gas pipe 64 is introduced into the combustion gas inlet CI of the power generation module 30 and supplied to the combustor 32. Then, the fuel off-gas supplied to the combustor 32 is combusted together with the oxidant off-gas supplied from the cathode outlet of the fuel cell stack 31 in the combustor 32. In the present embodiment, the orifice OF is formed in the recirculation pipe 63, and the fuel off-gas that has passed through the condenser 62 is distributed to the recirculation pipe 63 and the combustion gas pipe 64 at a distribution ratio based on the diameter of the orifice OF. By designing the diameter of the orifice OF such that the fuel off-gas is distributed to the fuel gas pipe 41 and the combustor 32 at an optimum distribution ratio, the efficiency of the fuel cell system 10 can be improved with a simple configuration. In the present embodiment, the orifice OF is provided in the recirculation pipe 63, but an electromagnetic valve may be further provided.

The condensed water obtained by condensing the water vapor contained in the fuel off-gas in the condenser 62 is supplied to the condensed water tank 66 through the condensed water pipe 68 branched at the branch point J2 from the fuel off-gas pipe 61, and is stored in the condensed water tank 66. A drain valve 67 is attached to an outlet of the condensed water tank 66, and the condensed water stored in the condensed water tank 66 is discharged to the outside by opening the drain valve 67.

As illustrated in Figs. 8A and 8B, in the present embodiment, the branch point J1 is formed above the branch point J2. The fuel blower 43, the orifice OF, and the combustion gas inlet CI of the power generation module 30 are located above the branch point J1, and the condensed water tank 66 is located below the branch point J2. The fuel off-gas pipe 61 extends upward from the branch point J2 and branches into the recirculation pipe 63 and the combustion gas pipe 64 at the branch point J1. The recirculation pipe 63 is connected to the fuel gas pipe 41 above the branch point J1 via the orifice OF, and the combustion gas pipe 64 is connected to the combustion gas inlet CI located above the branch point J1. On the other hand, the condensed water pipe 68 extends downward from the branch point J2 and is connected to the condensed water tank 66 installed at the bottom of the fuel cell unit 20. As a result, liquid condensed water can easily flow from the fuel off-gas pipe 61 to the condensed water pipe 68, and gaseous fuel off-gas can easily flow from the fuel off-gas pipe 61 to the recirculation pipe 63 and the combustion gas pipe 64. As a result, the water vapor contained in the fuel off-gas can be satisfactorily removed to recirculate the fuel off-gas to the fuel cell stack 31, and the power generation efficiency of the fuel cell stack 31 can be further improved.

As shown in Figs. 2 to 7, each condensed water tank subassembly 65 (condensed water tank 66 and drain valve 67) of the plurality of circulation systems 60 is collectively installed in a space at the bottom of the frame 21 defined below the plurality of fuel supply systems 40 (fuel blower subassemblies 42) aligned in the up-down direction. In the present embodiment, the respective condensed water tank subassemblies 65 are installed below the plurality of fuel supply systems 40 (fuel blower subassemblies 42) aligned in the up-down direction so as to be aligned in the right-left direction (lateral direction). As a result, the plurality of condensed water tank subassemblies 65 can be compactly disposed in a limited space, and the fuel cell unit 20 can be further downsized. As illustrated in Fig. 12, the respective condensed water tank subassemblies 65 are attached to a bracket 69, and the bracket 69 is fixed to the beam of the lowermost stage of the frame 21 with bolts. By making the condensed water tank subassembly 65 detachable from the frame 21 by bolts, maintainability can be further improved.

As illustrated in Figs. 2 to 7 and 9, the exhaust heat recovery system 70 includes a plurality of combustion exhaust gas pipes 72, one ends of which are connected to combustion exhaust gas outlets EX formed in the corresponding power generation modules 30 (module cases 35), respectively, and one exhaust gas heat exchanger 71 connected to the other ends of the plurality of combustion exhaust gas pipes 72. The exhaust gas heat exchanger 71 is installed below the plurality of fuel supply systems 40 and above the plurality of condensed water tank subassemblies 65. The combustion exhaust gas generated by the combustion of the fuel off-gas in the combustor 32 of each power generation module 30 is discharged, through the combustion exhaust gas channel in each power generation module 30, from the combustion exhaust gas outlet EX to each combustion exhaust gas pipe 72, and is introduced through each combustion exhaust gas pipe 72 into the exhaust gas heat exchanger 71. The combustion exhaust gas is subjected to heat exchange with the heat exchange medium in the exhaust gas heat exchanger 71, and then discharged to the outside air through the exhaust gas collecting pipe. Although not illustrated, the exhaust gas collecting pipe extends in a direction in which the plurality of fuel cell units 20 constituting the fuel cell system 10 are aligned, collects the combustion exhaust gas discharged from the exhaust gas heat exchanger 71 of each fuel cell unit 20, and discharges the collected combustion exhaust gas to the outside air. Heat recovered by heat exchange with the heat exchange medium is supplied to a heat utilizing device installed in a factory or the like. In the present embodiment, the combustion exhaust gas outlet EX is formed on the same surface as a side surface (front surface) of the power generation module 30 (module case 35) on which the fuel gas inlet GI and the combustion gas inlet CI are formed.

The electronic control unit 80 of each fuel cell unit 20 is provided for each power generation module 30 so as to control the operation of the corresponding fuel cell stack 31. As shown in Fig. 1, the electronic control units 80 are collectively installed at one end in an alignment direction (right-left direction) of the plurality of fuel cell units 20. Each electronic control unit 80 is configured as a microprocessor centered on a CPU, and includes a ROM, a RAM, an input/output port, and the like in addition to the CPU. Detection signals from the flow rate sensor 45 of the corresponding fuel supply system 40, the flow rate sensor 55 of the corresponding oxidant supply system 50, and the like are input to the electronic control unit 80 via the input port. On the other hand, from the electronic control unit 80, control signals to the fuel blower 43 of the corresponding fuel supply system 40, the air blower 53 of the corresponding oxidant supply system 50, the drain valve 67 of the corresponding circulation system 60, and the like are output via the output ports.

In the present embodiment, the fuel cell unit 20 includes a plurality of (M) fuel cell stacks 31 connected in series, and the fuel cell system 10 includes a plurality of (N) fuel cell units 20 in which the fuel cell stacks 31 are coupled so as to be connected in series among the plurality of fuel cell units 20. As a result, in the fuel cell system 10, N × M fuel cell stacks 31 are connected in series, and a large power generation output can be obtained. Therefore, in the fuel cell system 10, it is possible to respond to requests of various power generation output only by changing the number of fuel cell units 20 to be coupled. The fuel cell unit 20 includes a plurality of sets of power generation module 30 (fuel cell stack 31), fuel supply system 40 (fuel blower subassembly 42), oxidant supply system 50 (air blower subassembly 52), and circulation system 60 (condenser 62 and condensed water tank subassembly 65), each having the same configuration among the sets. As a result, the individual sizes of the constituent members (auxiliary machines) can be reduced, and these constituent members can be housed in a limited space of the fuel cell unit 20. As a result, the fuel cell system 10 can be further downsized while coping with a large power generation output. Furthermore, the cost can be greatly reduced by the mass production effect.

As described above, the plurality of power generation modules 30 housed in one fuel cell unit 20 are installed so as to be aligned in one direction (up-down direction), and the plurality of fuel supply systems 40 (fuel blower subassemblies 42) are installed so as to face the corresponding power generation modules 30, respectively. Therefore, the same fuel gas pipe 41, the same fuel off-gas pipe 61, the same recirculation pipe 63, and the like can be used for each power generation module 30. As a result, the pipe length of the recirculation pipe 63, the pipe length of the fuel off-gas pipe 61, and the pipe length of the fuel gas pipe 41 on the downstream side of the fuel blower 43 can be made the same for each power generation module 30, and the pressure and the flow rate of the gas flowing through the fuel supply line (fuel gas pipe 41, fuel off-gas pipe 61, and recirculation pipe 63) can be made the same. As a result, the specifications of the constituent members of the fuel supply system 40 can be made the same, and the cost can be reduced. In each electronic control unit 80, individual control logic and parameter adjustment in each power generation module 30 are unnecessary, and control is facilitated. Furthermore, since the air blower subassemblies 52 of the plurality of oxidant supply systems 50 and the condensed water tank subassemblies 65 of the plurality of circulation systems 60 are collectively installed in the empty space at the bottom of the frame 21, the dead space can be reduced to further downsize the fuel cell unit 20.

Since hydrogen gas is used as the fuel gas, a reformer for reforming (water vapor reforming) the raw fuel gas (natural gas or LP gas) and supply of water (water vapor) are unnecessary for the power generation module 30. In the present embodiment, the fuel off-gas from the anode outlet is passed through the condenser 62 outside the power generation module 30 to remove at least a part of the water vapor contained in the fuel off-gas, and then the fuel off-gas is recirculated to the fuel supply system 40 (fuel gas pipe 41), so that power generation efficiency of the fuel cell stack 31 can be improved. Since the remainder of the fuel off-gas from which at least a part of the water vapor has been removed is supplied to the combustor 32, the combustibility of the fuel off-gas in the combustor 32 can be further improved. As a result, the efficiency of the entire system can be improved.

In the embodiment described above, the plurality of power generation modules 30 included in the fuel cell unit 20 are installed so as to be aligned in the up-down direction, but may be installed so as to be aligned in the right-left direction.

In the embodiment described above, the plurality of fuel supply systems 40 (fuel blower subassemblies 42) included in the fuel cell unit 20 are installed so as to face the corresponding power generation modules 30, respectively. However, the plurality of fuel supply systems 40 may be installed at positions paired with the corresponding power generation modules 30, respectively. For example, the plurality of fuel supply systems 40 may be installed above the power generation modules 30 or below the power generation modules 30. However, in order to facilitate routing of pipes and the like, the plurality of fuel supply systems 40 are desirably installed in the vicinity of the corresponding power generation modules 30, respectively.

In the embodiment described above, the oxidant supply systems 50 (air blower subassemblies 52) are installed in an empty space below the power generation modules 30. However, the oxidant supply systems 50 may be installed in any place as long as the place is an empty space in the frame 21. For example, the oxidant supply systems 50 (air blower subassemblies 52) may be installed so as to face the power generation modules 30 opposite the fuel supply systems 40, respectively. In this case, the air inlet Al may be formed on a surface of the power generation module 30 (module case 35) facing the oxidant supply system 50.

In the embodiment described above, the fuel cell system 10 is configured by coupling the plurality of fuel cell units 20 having the same configuration, but may be configured by a single fuel cell unit 20.

The plurality of fuel cell units 20 included in the fuel cell system 10 are connected in series in the embodiment described above, but may be connected in parallel. That is, the plurality of fuel cell units 20 may be coupled such that the plurality of fuel cell stacks 31 connected in series in the fuel cell unit 20 are connected in parallel among the fuel cell units 20. In this case, it is possible to perform repair or inspection for each fuel cell unit 20 while operating the fuel cell system 10. For example, when some of the fuel cell units 20 fail, the failed fuel cell unit 20 can be separated from the fuel cell system 10 to operate the fuel cell system 10.

The fuel cell system may also be configured as a large-scale system in which a plurality of fuel cell systems 10 are coupled. In this case, the plurality of fuel cell systems 10 may be connected in series. That is, the plurality of fuel cell systems 10 may be coupled such that the fuel cell stacks 31 connected in series among the fuel cell units 20 are further connected in series among the fuel cell systems 10. In this case, when the number of fuel cell stacks 31 included in one fuel cell unit 20 is M, the number of fuel cell units 20 included in one fuel cell system 10 is N, and the number of fuel cell systems 10 to be coupled is L, M × N × L fuel cell stacks 31 are connected in series, and it is possible to respond to a request for a larger power generation output. The plurality of fuel cell systems 10 included in the large-scale system may also be connected in parallel. In this case, similarly to the fuel cell system 10 including the plurality of fuel cell units 20 connected in parallel, it is possible to perform repair or inspection for each fuel cell system 10 while operating the large-scale system.

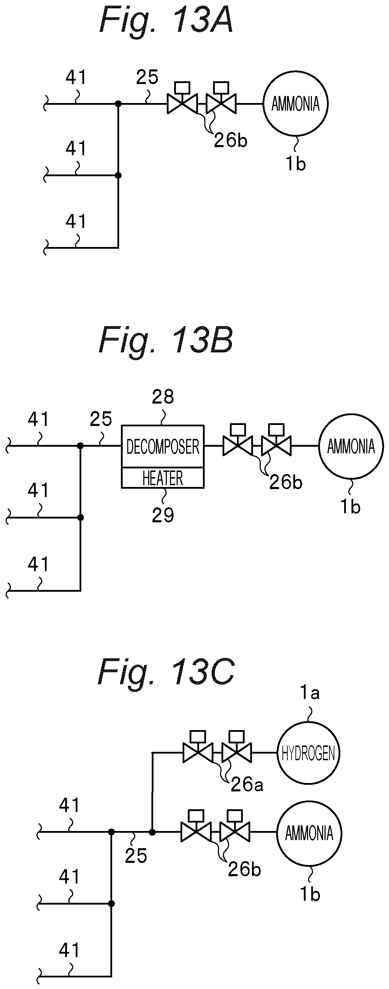

In the embodiment described above, the fuel cell system 10 supplies hydrogen gas as fuel gas to the anode of the fuel cell stack 31, but may supply ammonia gas. The ammonia gas supplied to the anode is decomposed into hydrogen gas and nitrogen gas by the action of the anode catalyst. The fuel cell stack 31 generates power by an electrochemical reaction between hydrogen gas decomposed at the anode and oxygen in oxidant gas (air) supplied to the cathode. In this case, as illustrated in Fig. 13A, an ammonia supply source 1b such as an ammonia tank is connected, as the fuel supply source 1, to the fuel pipe 25 via an on-off valve 26b. At the time of starting the fuel cell system 10, the ammonia gas may be supplied to the combustor 32 through the anode of the fuel cell stack 31, the fuel off-gas pipe 61, and the combustion gas pipe 64 in this order, and the oxidant gas may be supplied to the combustor 32 through the cathode of the fuel cell stack 31 to combust the mixed gas of the ammonia gas and the oxidant gas in the combustor 32, thereby warming up the fuel cell stack 31. As shown in Fig. 13B, a decomposition catalyst 28 for decomposing ammonia gas into hydrogen gas and nitrogen gas and a heater 29 for heating the decomposition catalyst 28 may be installed in the fuel supply pipe 25, and at the time of starting, the ammonia gas from the ammonia supply source 1b may be decomposed into hydrogen gas and nitrogen gas by the decomposition catalyst 28 and then supplied to the combustor 32. As shown in Fig. 13C, a hydrogen supply source 1a and the ammonia supply source 1b may be connected in parallel to the fuel pipe 25, and on-off valves 26a and 26b may be installed at the outlet of the hydrogen supply source 1a and the outlet of the ammonia supply source 1b, respectively. At the time of starting, the on-off valve 26a may be opened and the on-off valve 26b may be closed to supply the hydrogen gas from the hydrogen supply source 1a to the combustor 32. During power generation, the on-off valve 26a may be closed and the on-off valve 26b may be opened to supply the ammonia gas from the ammonia supply source 1b to the anode of the fuel cell stack 31.

Although the embodiments for carrying out the present disclosure have been described above with reference to the embodiments, the present disclosure is not limited to such embodiments at all, and can be carried out in various forms without departing from the gist of the present disclosure.

The present disclosure is applicable to a manufacturing industry and the like of a fuel cell system.

## Claims

1. A fuel cell system (10) comprising:
a plurality of power generation modules (30) each including a fuel cell stack (31) and a module case (35), the fuel cell stack (31) generating power with fuel gas supplied to an anode and oxidant gas supplied to a cathode, the module case (35) having a heat insulating property and housing the fuel cell stack (31);
a plurality of fuel supply systems (40) including a plurality of fuel supply lines (41), respectively, each of the fuel supply lines (41) supplying the fuel gas to corresponding one of the plurality of power generation modules (30);
a plurality of circulation systems (60) including a plurality of recirculation lines (63), respectively, each of the recirculation lines (63) causing fuel off-gas discharged from corresponding one of the plurality of power generation modules (30) to pass through corresponding one of heat exchangers (62) and then to be recirculated to corresponding one of the fuel supply lines (41);
a plurality of condensed water tanks (66) each storing condensed water obtained by condensation in corresponding one of the heat exchangers (62) of water vapor contained in the fuel off-gas in corresponding one of the plurality of circulation systems (60); and
a frame (21) that supports the plurality of power generation modules (30), the plurality of fuel supply systems (40), and the plurality of condensed water tanks (66), wherein
the plurality of condensed water tanks (66) are installed in a space defined below installation positions of the plurality of power generation modules (30) in the frame (21).

2. The fuel cell system (10) according to Claim 1, wherein the plurality of condensed water tanks (66) are installed so as to be located below the plurality of fuel supply systems (40).

3. The fuel cell system (10) according to Claim 2, wherein
each of the plurality of fuel supply systems (40) is installed so as to be aligned with corresponding one of the power generation modules (30) in a lateral direction, and
the plurality of condensed water tanks (66) are installed below the plurality of fuel supply systems (40) so as to be aligned in a lateral direction.

4. The fuel cell system (10) according to any one of Claims 1 to 3, further comprising:
a plurality of condensed water lines (68) connected to the plurality of condensed water tanks (66), respectively, wherein
each of the plurality of circulation systems (60) includes a fuel off-gas line (61) through which the fuel off-gas discharged from corresponding one of the power generation modules (30) flows, the heat exchanger (62) provided in the fuel off-gas line (61), and a recirculation line (63) connected to a downstream side of the heat exchanger (62) in the fuel off-gas line (61) and corresponding one of the fuel supply lines (41),
the plurality of condensed water lines (68) branch from branch points (J2), respectively, on a downstream side of the heat exchanger (62) in the fuel off-gas line (61) of corresponding one of the circulation systems (60) and are connected to corresponding ones of the condensed water tanks (66), respectively,
each of the plurality of condensed water lines (68) extends downward from corresponding one of the branch points (J2), and
each of the plurality of fuel off-gas lines (61) extends upward from corresponding one of the branch points (J2) with the condensed water lines (68) and is connected to the corresponding one of the recirculation lines (63).
